# EUROPEAN PATENT SPECIFICATION

(11) **EP 2 165 852 B1**
(45) Date of publication and mention of the grant of the patent: **10.04.2013**
(21) Application number: 09170320.7
(22) Date of filing: 15.09.2009
(51) Int. Cl.: B60B 35/10

(54) **Apparatus, system, and method for changing the track of the vehicle**
Vorrichtung, System und Verfahren zur Spurweitenveränderung eines Fahrzeugs
Appareil, système et procédé pour le réglage de l'écartement d'un véhicule

(30) Priority: 16.09.2008 FI 20085867
(43) Date of publication of application: 24.03.2010
(73) Proprietor: Dinolift Oy, 32210 Loimaa (FI)
(72) Inventor: Siivola, Santtu, FI-32210 Loimaa (FI)
(74) Representative: Brax, Matti Juhani

(56) References cited:
- EP-A2- 1 529 722
- WO-A1-84/00729
- WO-A1-2008/155591
- CH-A5- 693 751
- US-A- 3 264 009
- US-A- 3 664 448
- US-A- 4 109 747

## Description

### TECHNICAL FIELD OF THE INVENTION

The invention relates to an apparatus for adjusting the track of a transportable vehicle. The invention also relates to a control system for an apparatus provided for adjusting the track of a transportable vehicle. Furthermore, the invention relates to a method for adjusting the track of a transportable vehicle, and to a vehicle equipped with an apparatus for adjusting the track.

Such an apparatus according to the preamble of claim 1 is known from US 4 109 747 A.

### PRIOR ART

In new building or reconstruction, workers or goods must be continually lifted up to a high level, so that transportable aerial work platforms have been developed for this purpose. A problem with bringing transportable aerial work platforms, hoisting cranes or other machinery to their site of use is constituted, particularly in cities, not only by the limited space of the worksite, due to the continuously shrinking plot area, but also by narrow doorways, through which buildings can be entered, and gates providing the passage to, for example, inner courts of buildings.

Because of obstacles formed by narrow doorways, entrances to high-rise buildings or passage channels, arrangements have been developed for transportable aerial work platforms, hoisting cranes or other machinery, by means of which it has been possible to make the track of transportable vehicles narrower; that is, to reduce the distance between the tyres on the same axle of the vehicle, so that the width of the transportable vehicle would not be limited by the length of the axle between the tyres.

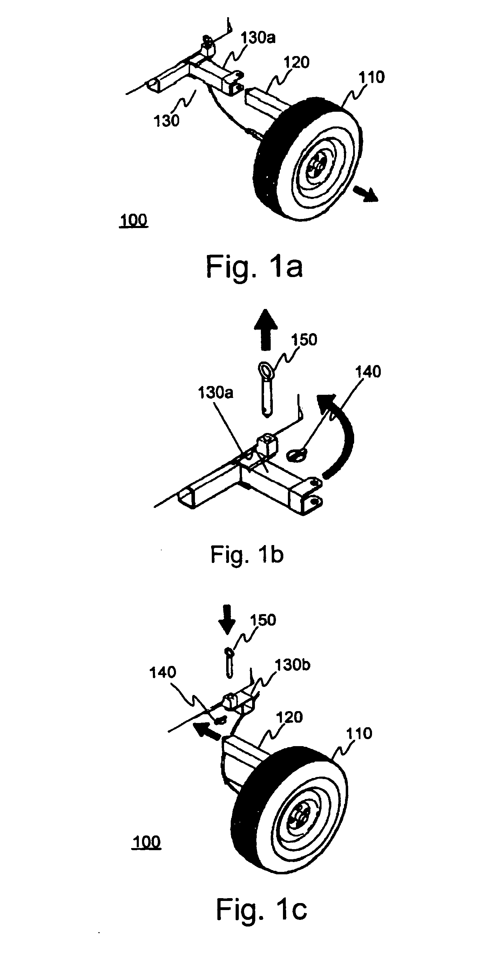

Figures 1 a to 1c show a possible arrangement for making the axle of a transportable vehicle narrower. The wheels of the vehicle, which is not shown in the figures, are on the same axle in relation to the longitudinal direction of the vehicle when the axles 100 are in a towing position.

When the axle system 100 is made narrower, the vehicle is lifted off the ground by means of hoist legs (not shown in the figure). After this, as shown in Fig. 1 a, the wheel 100 and its axle 120 are pulled off the sleeve 130 of the axle system 130 manually and lowered onto a base. The axle system 130, which makes the narrowing of the axle possible, comprises a long sleeve 130a and a short sleeve 130b.

Next, as shown in Fig. 1b, a locking pin 150 equipped with a closure pin 140 is removed by lifting, and the axle system 130 is turned 90° in the horizontal plane to expose the shorter sleeve 130b of the axle system. When the shorter sleeve 130b of the axle system is in place, the locking pin 150 and the closure pin 140 are reinstalled, and finally, as shown in Fig. 1c, the axle 120 of the wheel is inserted into the shorter sleeve 130b of the axle system. The same procedure is repeated for the other wheel on the opposite side of the vehicle, after which the track of the wheels is narrower, thanks to the narrowing, but the wheels are on a different axle in the longitudinal direction of the vehicle. The axle narrowing implemented in the above-described manner has the drawback of being difficult and heavy to use.

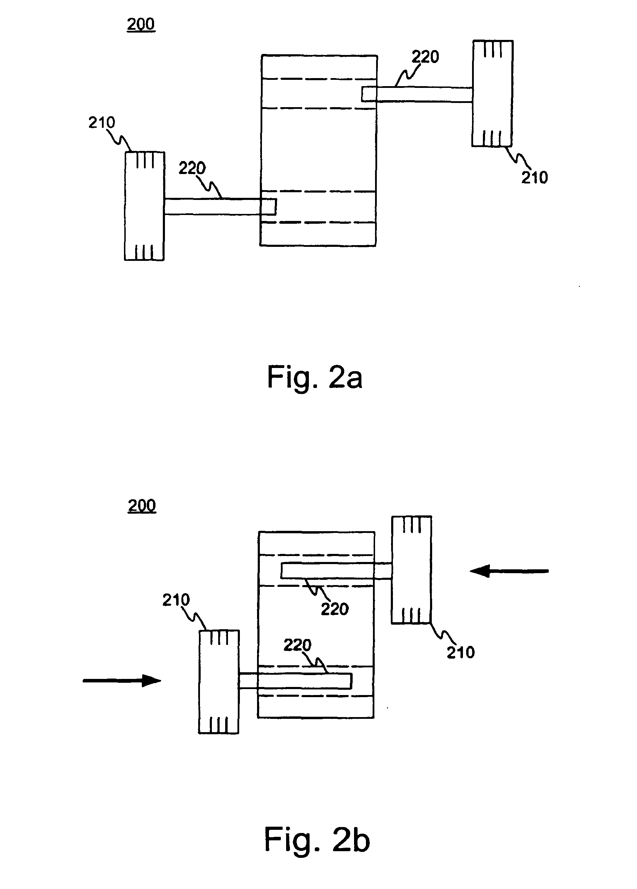

Another way of making the track of a towable vehicle narrower is shown in Figs. 2a and 2b, in which the wheels 210 of the axle system 200 are located on different axles in relation to the longitudinal direction of the vehicle, when the vehicle is in the transport position. The axles 220 of the wheels slide inwards in a telescopic manner when the track of the vehicle is made narrower. This arrangement has the disadvantage of a small bearing distance in the transport position, and thereby a narrow track which, together with the wheels 210 located on different axles in relation to the longitudinal direction of the vehicle, make the vehicle unstable.

### SUMMARY OF THE INVENTION

It is an aim of the invention to implement an apparatus for changing the track of a vehicle, a system for controlling the changing of the track of a vehicle, a method for changing the track of a vehicle, and a vehicle equipped with an apparatus for adjusting the track.

The aim of the invention is achieved with an apparatus comprising means for changing the position of two axles, connected to each other, in the longitudinal direction of the vehicle, and means for changing the position of said two axles connected to each other, in the width direction of the vehicle.

The aim of the invention is also achieved with a system comprising means for controlling a change in the position of two axles, connected to each other, in the longitudinal direction and the width direction of a vehicle.

The aim of the invention is achieved with a method for changing the position of two axles, connected to each other, in the longitudinal direction of the vehicle, and for changing the position of said two axles connected to each other, in the width direction of the vehicle.

The aim of the invention is also achieved with a vehicle equipped with an apparatus comprising means for changing the position of two axles, connected to each other, in the longitudinal direction of the vehicle, and means for changing the position of said two axles connected to each other, in the width direction of the vehicle.

According to an embodiment of the invention, axles which are aligned in the longitudinal direction of a vehicle and are equipped with tyres and are connected to each other by means of a connecting shaft, are transferred in a first step hydraulically by means of articulations and a cylinder in such a way that the track of the tyres becomes narrower as one axle is moved forward in the longitudinal direction and the other axle is moved backward from the original position. In a second step, the track becomes even narrower when the axles are pulled hydraulically "inwards" by cylinders provided for the purpose. The axles are thus left in different positions in the longitudinal direction of the vehicle. In a corresponding manner, the track that has been made narrower can be restored to its maximum width in a reverse procedure.

One embodiment of the presented invention relates to an apparatus according to the independent claim 1.

One embodiment of the presented invention also relates to a system according to the independent claim 7.

One embodiment of the presented invention further relates to a method according to the independent claim 12.

One embodiment of the presented invention further relates to a vehicle according to the independent claim 14.

According to one embodiment of the invention, an apparatus for changing the track of a vehicle comprises means for changing the position of two axles, connected to each other and equipped with the wheels of the vehicle, in the longitudinal direction of the vehicle compared with the initial position, wherein at this stage, the track also becomes narrower (wider), and also means for changing the position of said axles in the width direction of the vehicle, wherein changes also take place in the track of the tyres.

The term "vehicle" refers to an apparatus intended for moving on the ground, which does not move on tracks, and it may be, for example, a trailer, a trailer carriage, or a towable apparatus.

The term "track" refers to the distance between the tyres of the vehicle, seen from above or below the vehicle, in its width direction.

The term "longitudinal direction of the vehicle" typically refers to the direction that is parallel to the direction of movement of the vehicle.

The term "width direction of the vehicle" typically refers to the direction that is perpendicular to the direction of movement of the vehicle.

An apparatus according to an embodiment of the invention, in which said two axles are connected to each other by means of a connecting shaft articulated at both ends and being capable of pivoting around its centre connected to the frame of the apparatus at least 90° in the horizontal plane. The structure that connects the axles may also be implemented, for example, by means of several articulated arms connected to the frame, or one or more pinions.

An apparatus according to an embodiment of the invention, presented in any of the above-described embodiments of the invention, comprises said means for changing the position of two axles, connected to each other, in the longitudinal direction of the vehicle, comprising a cylinder, for example a double-acting cylinder, which enables the pivoting of said axles by means of a connecting shaft in the horizontal plane with respect to the frame of the apparatus.

An apparatus according to an embodiment of the invention, presented in any of the above-described embodiments of the invention, comprises means for changing the position of two axles, connected to each other, in the width direction of the vehicle, comprising two other cylinders, by whose movement the axles are transferred in a telescopic manner into a tubular structure provided for each axle in the structure, and out of the tubular structure when the track is made wider. The cylinder may be, for example, a conventional double-acting cylinder or a telescopic cylinder.

An apparatus according to an embodiment of the invention, presented in any of the above-described embodiments of the invention, in which the means for changing the position of two axles, connected to each other, in the longitudinal direction and in the width direction of the vehicle are controlled hydraulically by means of valves. The control can be implemented, for example, by a directional valve and two sequence valves. The track can be adjusted by means of the apparatus and its control in a stepless manner so that the movement of the axles can be stopped at any desired point between the minimum width and the maximum width, wherein the track does not need to be made any narrower or wider than is necessary for the use situation.

An apparatus according to an embodiment of the invention, presented in any of the above-described embodiments of the invention, is configured to change in a first step the position of two axles, connected to each other, in the longitudinal direction of the vehicle, wherein the track of the vehicle becomes simultaneously narrower, and then in a second step to change the position of the axles in the width direction of the vehicle, wherein the track of the vehicle is made narrower to its minimum width.

An apparatus according to an embodiment of the invention, presented in any of the above-described embodiments of the invention, the second axle of said apparatus being located farther ahead in the longitudinal direction of the vehicle than the second axle, the track of the vehicle having been made narrower than the maximum width.

An apparatus according to an embodiment of the invention, presented in any of the above-described embodiments of the invention, is configured to change in a first step the position of two axles, connected to each other, in the width direction of the vehicle, wherein the track of the vehicle becomes wider, and then in a second step to change the position of the axles in the longitudinal direction of the vehicle in such a way that the track of the vehicle is made wider to its maximum width.

An apparatus according to one embodiment of the invention, presented in any of the above-described embodiments of the invention, in which apparatus both of the axles are located on the same axis in the longitudinal direction of the vehicle, the track of the vehicle having been made as wide as possible.

The apparatus according to the embodiments of the invention makes it possible to make the track of the vehicle narrower or wider "with a single button press", wherein the physical work that has closely interlocked with making the axle narrower, is eliminated. Furthermore, the apparatus and its control make it possible to change the track in a stepless manner so that the track of the transportable vehicle can be adjusted to the desired width.

### BRIEF DESCRIPTION OF THE DRAWINGS

In the following, the embodiments of the invention will be described in more detail with reference, by way of example, to the drawings, in which
- Figs. 1 a to 1c: show a method according to the prior art for making the axle narrower,
- Figs. 2a and 2b: show another method according to the prior art for making the axle narrower,
- Figs. 3a to 3c: show a method according to an advantageous embodiment of the invention to implement the changing of the track of the vehicle,
- Fig. 4: shows the hydraulic diagram for the control of an apparatus according to an advantageous embodiment of the invention,
- Fig.5: is an exploded view showing the apparatus according to an advantageous embodiment of the invention, provided for changing the track of a vehicle,
- Fig. 6: is an exemplary flow chart showing a method according to an advantageous embodiment of the invention, for making the track of a vehicle narrower, and
- Fig. 7: is an exemplary flow chart showing a method according to an advantageous embodiment of the invention, for making the track of a vehicle wider.

### DETAILED DESCRIPTION

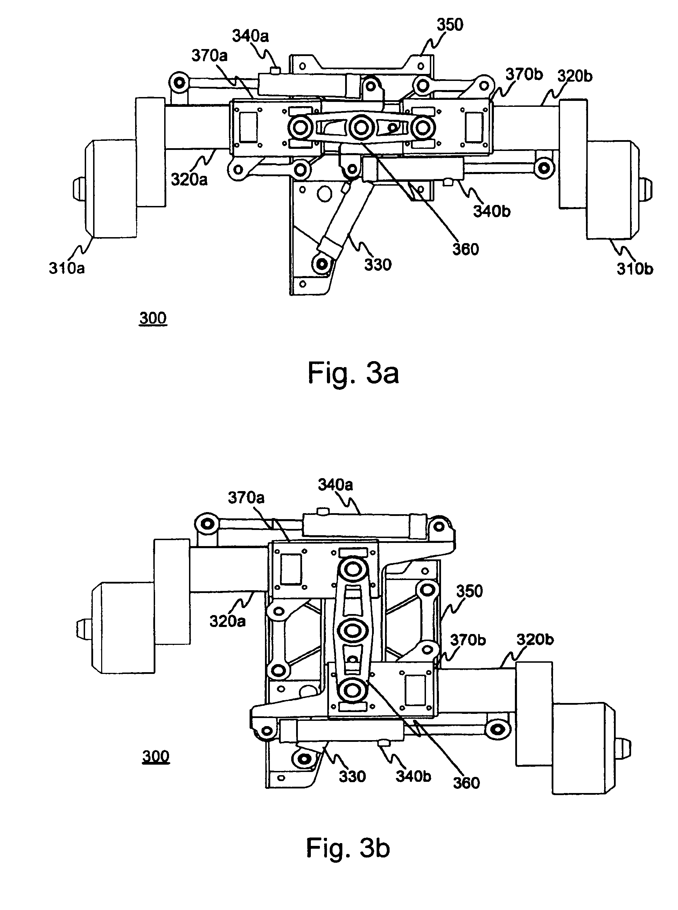

Figure 3a shows, viewed from below, an initial situation, in which the axle system of a vehicle to be towed (not shown in the figure), such as, for example, an aerial work platform, is expanded to the towing position, in which the axle system is in its maximum width. Thus, the rotating cylinder 330 of the apparatus 300 that constitutes the axle system and the cylinders 340a and 340b of the telescope are in their maximum length. Axles 320a and 320b, which have been coupled to wheel hubs 310a and 310b, are, in the initial situation, in the same position with respect to the longitudinal direction of the vehicle.

Figure 3b shows the first step of making the track narrower, wherein the rotating cylinder 330 is compressed to its minimum length. When the rotating cylinder 330 compresses, the connecting shaft 360 that connects the axles 320a and 320b (in fact, the cylinder tubes 370a and 370b of the axles) pivots 90° clockwise in the horizontal plane. Because of the pivoting movement caused by the rotating cylinder 330, the axles 320a and 320 retract "inwards" and they are also moved in opposite directions along the longitudinal direction of the vehicle, wherein the axles 320a and 320b end up in different positions in the longitudinal direction of the vehicle. At this stage, the cylinders 340a and 340b of the telescope are still extended to their maximum length.

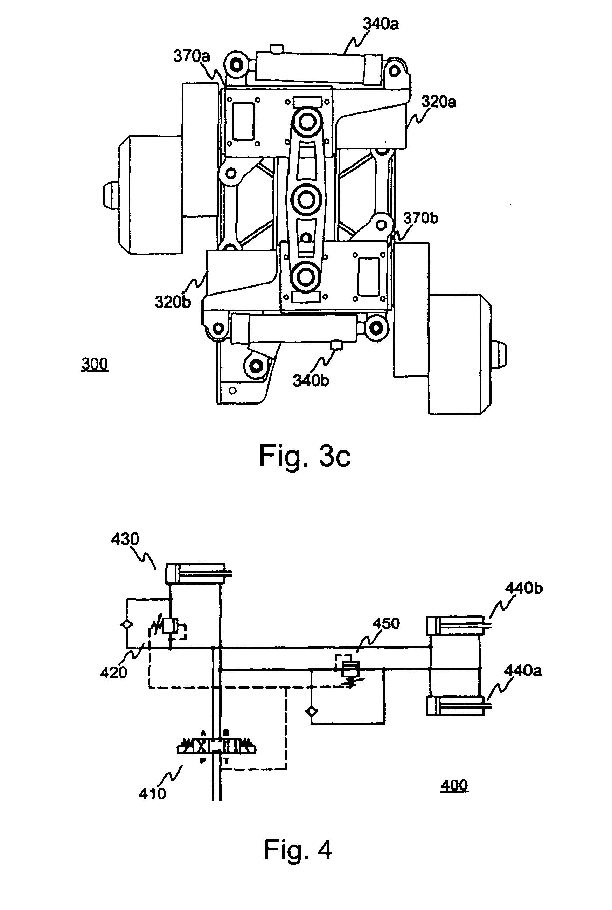

In the second step of the narrowing, shown in Fig. 3c, the cylinders 340a and 340b of the telescope are also compressed to their minimum length, wherein the axles 320a and 320b retract into the cylinder tubes 370a and 370b, making the track of the vehicle even narrower. The minimum width of the track provided by means of the apparatus 300 according to the invention depends on the physical dimensions of the structures of the apparatus 300.

The narrowing of the track is carried out in two steps in the above-described order, to prevent the parts of the apparatus from colliding with each other. In a corresponding manner, for making the track of the vehicle wider, the cylinders 340a and 340b of the telescope must be extended to their maximum length before the pivoting movement caused by the rotating cylinder 330, to prevent the parts from colliding.

Figure 4 shows a hydraulic diagram on the control of an apparatus intended for making the track narrower, illustrating one way of implementing the control 400 of the apparatus.

In the initial situation, in which the rotating cylinder 430 and the cylinders 440a and 440b of the telescope are extended to their maximum length (the retracted position of the cylinder), when the user wants to make the track of the apparatus in the towing position narrower, he/she will, for example, push a switch indicating the narrowing function in the user interface of the apparatus (not shown in the figure). Thus, upon the command, an electrically controlled directional valve 410 will be switched to its first position and, as a result, the piston of the rotating cylinder 430 will start to move towards the extended position (working stroke). The control command for the directional valve can also be implemented, for example, mechanically (lever switch control), hydraulically or pneumatically.

First after the pressure of the system has risen to the level predetermined by the spring of the sequence valve 420, that is, in practice, after the rotating cylinder 430 has completed its stroke and it has been compressed to its minimum length, causing a movement of the axles of the apparatus according to the first step in both the longitudinal direction and the width direction of the vehicle, the sequence valve 420 will open. Opening of the sequence valve 420 will let oil flow onto the telescopic cylinders 440a and 440b extended to their maximum length and performing, in turn, their working stroke, wherein the cylinders 440a and 440b are compressed to their minimum length, thereby causing the retraction of the axles inwards and the second step of narrowing the track of the vehicle in the width direction of the vehicle.

In a corresponding manner, to widen the narrowed track to its maximum width for towing, the user presses a switch that indicates the widening function in the user interface. Thus, the pistons of the cylinders 440a and 440b of the telescope, reduced to their minimum length (extended position), start to move towards the retracted position, causing the axles to project outwards from the cylinder tubes of the axles and making the track wider. After the cylinders 440a and 440b have completed their retract stroke and been compressed to their maximum length, wherein the pressure of the system reaches the level determined by the spring of the sequence valve 450, the sequence valve 450 opens, letting oil flow onto the rotating cylinder 430 which is extended to its minimum length and starts, in turn, to move towards the retracted position and maximum length. As a result of the movement, the axles are pivoted 90° by means of the connecting shaft, causing their displacement in both the longitudinal and width directions of the vehicle. As a result of the pivoting, the track becomes wider to its maximum width, and the axles end up at the same point in the longitudinal direction of the vehicle, thereby making the vehicle more stable to tow.

The track of the vehicle can be adjusted in a stepless manner by means of the control, wherein the movement of the rotating cylinder 430 or the cylinders 440a and 440b of the telescope can be stopped at any desired point between the minimum width and the maximum width. Thus, the track does not need to be made any narrower or wider than is necessary for the use situation.

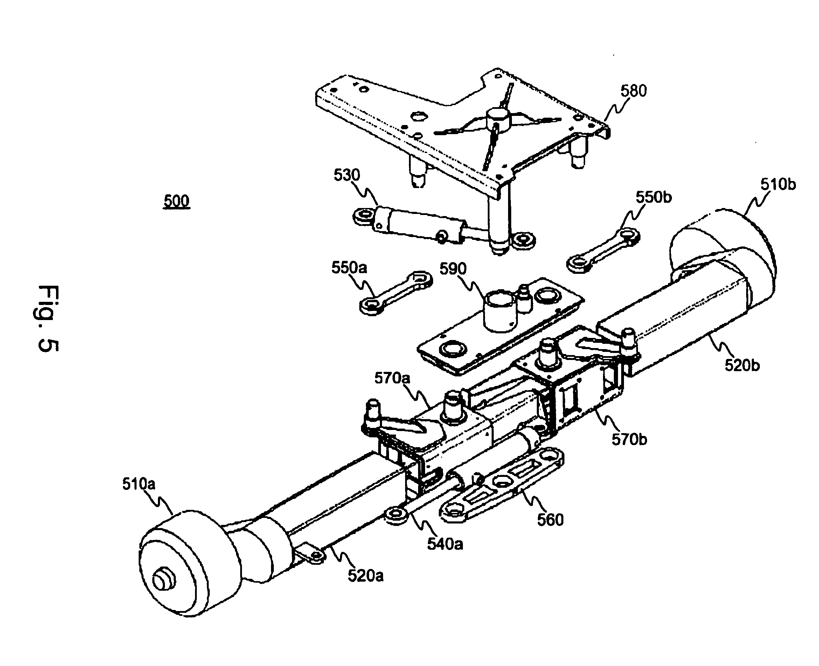

Figure 5 shows an exploded view of an apparatus 500 that comprises a telescope and an articulated mechanism and makes it possible to change the track of a towable vehicle with a single button press.

The apparatus 500 comprises wheel hubs 510a and 510b which are connected to axles 520a and 520b which, in turn, move inwards when the track of the vehicle is made narrower, and outwards when it is made wider, with respect to the cylinder tubes 570a and 570b of the axles, by means of the cylinders of the telescope, of which only one cylinder 540a is shown.

The pivoting of the axles 520a and 520b in such a way that they are moved simultaneously both in the longitudinal and the width direction of the vehicle, is made possible by a connecting shaft 560 mounted on the cylinder tubes 570a and 570b of the telescope and also connected in its centre by a shaft to the frame 580 of the apparatus. In addition to the connecting shaft, the articulated mechanism that makes the pivoting of the axles 520a and 520b possible, comprises directional arms 550a and 550b mounted at their ends to the cylinder tubes 570a and 570b and the frame 580 and keeping the wheels of the vehicle in its travel direction during the pivoting of the axles 520a and 520b, a rotor arm 590 provided in connection with the frame 580 and the cylinder tubes 570a and 570b, as well as a rotating cylinder 530.

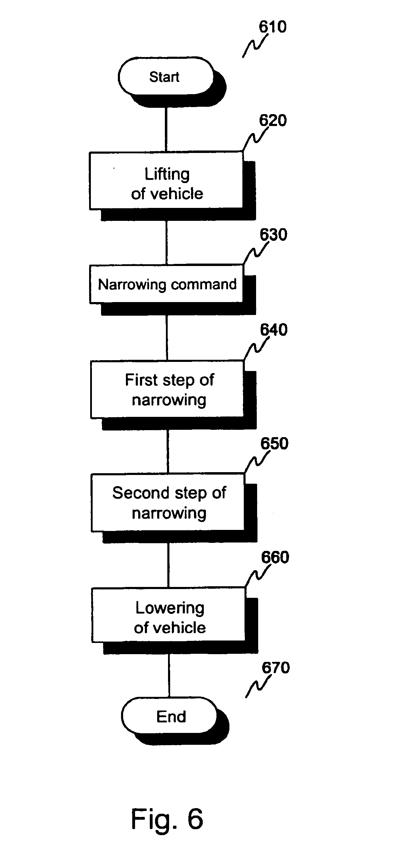

Figure 6 is a flow chart illustrating the method according to the invention for making the track of a vehicle, such as a towable aerial work platform, narrower, the starting step 610 comprising various operations for preparing the aerial work platform in the towing position for making the track narrower. Such operations may include, for example, releasing the locking of the towable aerial work platform that prevents the narrowing, or removing extra objects that have been loaded in it for the time of transportation.

After the preparatory steps have been taken, in step 620 the operator of the apparatus enters a command to the apparatus via the user interface of the vehicle, electrically, mechanically or in another corresponding way, to lift the aerial work platform onto the support of the hoist legs belonging to the same.

In step 630, when the aerial work platform is in the lifted position and supported by the hoist legs, the user enters a command via the user interface, which may be either a separate user interface or a common user interface for the various functions of the whole aerial work platform, to perform the operation of making the track narrower, and in step 640, in the above-described manner, the articulated mechanism and the rotating cylinder of the apparatus for adjusting the track of the aerial work platform will perform the first step of narrowing, in which the axles in the same plane in the longitudinal direction of the vehicle are moved in such a way that the axle on one side moves forward in the longitudinal direction and the axle on the other side moves backwards. At the same time, the axles and their respective wheels move inwards in the width direction of the vehicle, thereby making the track of the aerial work platform narrower. Alternatively, the narrowing command also comprises the hoisting included in the preceding step 620.

In the second step 650 of narrowing, the telescopes and the respective cylinders take over the operation of the articulated mechanism and make the track of the aerial work platform narrower to its minimum length, so that it can be transferred through narrow passages.

After the narrowing, in step 660, the user enters a command via the user interface of the aerial work platform to lower the aerial work platform from the support of the hoist legs back to the ground again, and the narrowing ends in step 670.

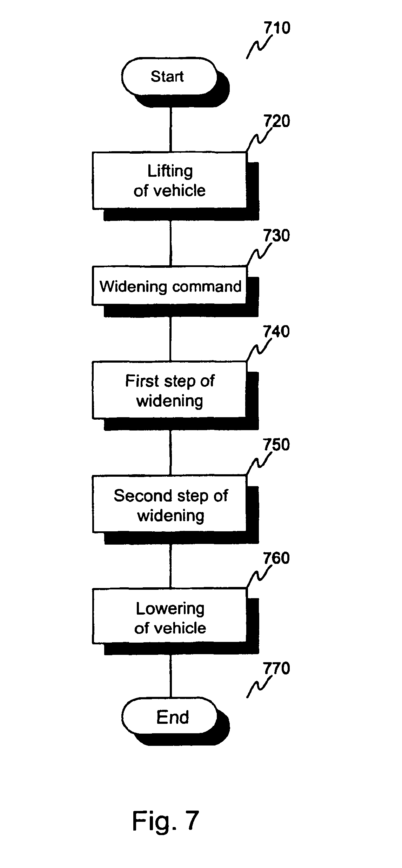

Figure 7, in turn, shows a flow chart on a method of making the track of a towable aerial work platform wider, In the initial step 710, various preparatory steps can be taken, for example, to release a locking that prevents the widening, or to remove extra objects that have been loaded in it for the time of making it narrower, to prepare the aerial work platform that has been made narrower, for making the track wider.

In step 720, the operator of the apparatus enters a command via the user interface to the aerial work platform to lift the aerial work platform onto the support of the hoist legs belonging to the same, to make the narrowing possible.

When the aerial work platform is in the lifted position and supported by the hoist legs, in step 730 the operator enters a command via the user interface to make the track wider as shown in connection with the preceding figures. Alternatively, this step may also include the lifting up onto the support of the hoist legs included in step 720.

In the first step 740 of the widening, the telescopes and the respective cylinders of the apparatus for adjusting the track of the aerial work platform push the axles and the respective wheels outwards in the width direction of the vehicle to a first width, the axles still remaining at different points in the longitudinal direction of the vehicle.

In the second step 750, the articulated mechanism and the rotating cylinder pivot the axles with the respective wheels in such a way that they are aligned in the longitudinal direction of the vehicle and simultaneously, in the width direction of the vehicle, further outwards, making the track of the aerial work platform wider to its maximum width.

In step 760, after the widening of the track has been completed, the operator enters a command via the user interface to lower the aerial work platform back to the ground, and the widening is ended in step 770.

Above, only some embodiments of the arrangement according to the invention have been presented. The principle according to the invention can naturally be modified within the scope of protection defined in the claims, for example with respect to the details of the implementation and the range of use.

## Claims

1. An apparatus for making the track of a vehicle narrower, the apparatus (300) comprising second means (340a, 340b) for changing the position of said two axles connected to each other, in the width direction of the vehicle, **characterized in that**
it further comprises
means (330, 360) for changing the position of two axles (320a, 320b) connected to each other, in the longitudinal direction of the vehicle

2. The apparatus according to claim 1, in which said two axles are connected to each other by means of a connecting shaft (360).

3. The apparatus according to claim 1 or 2, in which said means for changing the position of the two axles connected to each other, in the longitudinal direction of the vehicle, comprise a first cylinder (330) enabling the pivoting of said axles by means of a connecting shaft with respect to the frame (350) of the apparatus in the horizontal plane, and said second means for changing the position of the two axles connected to each other, in the width direction of the vehicle, comprise two second cylinders (340a, 340b) enabling the shifting of said axles into and out of a tubular structure (370a, 370b) provided for each axle.

4. The apparatus according to any of the claims 1 to 3, in which said means for changing the position of the two axles connected to each other in the longitudinal direction of the vehicle and said second means for changing the position of the two axles connected to each other in the width direction of the vehicle are controlled hydraulically by means of valves (410, 420, 450).

5. The apparatus according to any of the claims 1 to 4, in which said apparatus is arranged to change first the position of said two axles connected to each other, in the longitudinal direction of the vehicle, and to change then the position of said two axles connected to each other, in the width direction of the vehicle, when the track of the vehicle is made narrower, and to change first the position of said two axles connected to each other, in the width direction of the vehicle, and to change then the position of said two axles connected to each other, in the longitudinal direction of the vehicle, when the track of the vehicle is made wider.

6. The apparatus according to claim 5, in which one of said axles (320a) is located farther ahead in the longitudinal direction of the vehicle than the other of said axles (320b) when the track of the vehicle is in the narrowed state, and both of said axles are placed on the same axle in the longitudinal direction of the vehicle when the track of the vehicle is widened to its maximum width.

7. A system for controlling the narrowing of the track of a vehicle comprising the apparatus of claim 1, **characterized in that** the system further comprises
means (400) for changing the position of two axles (320a, 320b) connected to each other, in the longitudinal direction and the width direction of the vehicle.

8. The system according to claim 7, in which said means for controlling the change in position of the two axles connected to each other, in the longitudinal direction and the width direction of the vehicle, are configured to control a first cylinder for changing the position of the two axles connected to each other, in the longitudinal direction of the vehicle, and to control two second cylinders for hanging the position of the two axles connected to each other, in the width direction of the vehicle.

9. The system according to claim 8, in which said first cylinder enables the pivoting of said axles with respect to a connecting shaft (360) in the horizontal plane, and said two second cylinders enable the moving of said axles into and out of a tubular structure (370a, 370b) provided for each axle.

10. The system according to any of the claims 7 to 9, in which said means for controlling the change in the position of the two axles connected to each other, in the longitudinal direction and the width direction of the vehicle, comprise a directional valve and two sequence valves.

11. The system according to any of the claims 7 to 10, in which said system is configured to change first the position of said two axles connected to each other, in the longitudinal direction of the vehicle, and to change then the position of said two axles connected to each other, in the width direction of the vehicle when the track of the vehicle is made narrower, and to change first the position of said two axles connected to each other, in the width direction of the vehicle, and to change then the position of said two axles connected to each other, in the longitudinal direction of the vehicle, when the track of the vehicle is made wider.

12. A method for making the track of a vehicle narrower, **characterized in**
changing the position of two axles (320a, 320b) connected to each other, in the longitudinal direction of the vehicle, and in a separate step
changing the position of said two axles connected to each other, in the width direction of the vehicle.

13. The method according to claim 12, in which method the position of said two axles connected to each other is first changed in the longitudinal direction of the vehicle, and the position of said two axles connected to each other is then changed in the width direction of the vehicle when the track of the vehicle is made narrower, and the position of said two axles connected to each other is first changed in the width direction of the vehicle and the position of said two axles connected to each other is then changed in the longitudinal direction of the vehicle, when the track of the vehicle is made wider.

14. A vehicle, **characterized in that** the vehicle comprises an apparatus (300) according to any of the claims 1 to 6.

## Patentansprüche

1. Vorrichtung zur Reduzierung der Spurweite eines Fahrzeugs, wobei die Vorrichtung zweite Mittel (340a, 340b) zur Änderung der Position der zwei miteinander verbundenen Achsen in Richtung der Breite des Fahrzeugs umfasst, **dadurch gekennzeichnet, dass** sie darüber hinaus Mittel (330, 360) zur Änderung der Position von zwei, miteinander verbundenen Achsen in longitudinaler Richtung des Fahrzeugs umfasst.

2. Vorrichtung gemäß des Anspruchs 1, wobei die zwei Achsen über eine Verbindungswelle (360) miteinander verbunden sind.

3. Vorrichtung gemäß des Anspruchs 1 oder 2, wobei die Mittel zur Änderung der Position der zwei miteinander verbundenen Achsen in longitudinaler Richtung des Fahrzeugs einen ersten Zylinder (330) umfassen, der es ermöglicht, dass die zwei miteinander verbundenen Achsen relativ zum Rahmen (350) der Vorrichtung mit Hilfe einer Verbindungswelle in einer horizontalen Ebene schwenkbar sind, und wobei die zweiten Mittel zur Änderung der Position der zwei miteinander verbundenen Achsen in Richtung der Breite des Fahrzeugs, einen zweiten Zylinder (340a,340b) umfassen, der es ermöglicht, dass die zwei miteinander verbundenen Achsen in eine für jede Achse vorgesehene röhrenförmige Struktur (370a,370b) hinein und aus ihr heraus geschoben werden können.

4. Vorrichtung gemäß einem der Ansprüche 1 bis 3, wobei die besagten Mittel zur Änderung der Position der zwei miteinander verbundenen Achsen in longitudinaler Richtung, und die zweiten Mittel zur Änderung der Position der zwei miteinander verbundenen Achsen in Richtung der Breite des Fahrzeugs hydraulisch mit Hilfe von Ventilen kontrolliert werden (410,420,450).

5. Vorrichtung gemäß einem der Ansprüche 1 bis 4, wobei die besagte Vorrichtung derart ausgebildet ist, dass zunächst die Position der zwei miteinander verbundenen Achsen in longitudinaler Richtung des Fahrzeugs geändert wird und dann die Position der zwei miteinander verbundenen Achsen die Richtung der Breite des Fahrzeugs geändert wird, falls die Spurweite des Fahrzeugs reduziert wird, und, dass zunächst die Position der zwei miteinander verbundenen Achsen in die Richtung der Breite des Fahrzeugs geändert wird und dann die Position der zwei miteinander verbundenen Achsen in longitudinaler Richtung des Fahrzeugs geändert wird, falls die Spurweite des Fahrzeugs vergrößert wird.

6. Vorrichtung gemäß des Anspruchs 5, wobei die eine Achse (320a) weiter vorne in longitudinaler Richtung des Fahrzeugs platziert wird als die andere Achse (320b), wenn die Spurweite des Fahrzeugs reduziert wird, und beide Achsen in longitudinaler Richtung des Fahrzeugs auf dieselbe Achse positioniert werden, wenn die Spurweite des Fahrzeugs auf seine maximal annehmbare Weite vergrößert wird.

7. System zur Kontrolle des Reduzierens der Spurweite eines Fahrzeugs, umfassend die Vorrichtung nach Anspruch 1, **dadurch gekennzeichnet, dass** das System Mittel (400) zur Änderung der Position der zwei miteinander verbundenen Achsen (320a, 320b) in longitudinaler Richtung des Fahrzeugs und in der Richtung der Breite des Fahrzeugs umfasst.

8. System gemäß des Anspruchs 7, wobei die besagten Mittel zur Änderung der Position der zwei miteinander verbundenen Achsen sowohl in longitudinaler Richtung des Fahrzeugs als auch der Richtung der Breite des Fahrzeugs, derart gestaltet sind, dass zur Änderung der Position in longitudinaler Richtung des Fahrzeugs ein erster Zylinder vorgesehen ist und zur Änderung der Position in Richtung der Breite des Fahrzeugs zwei zweite Zylinder vorgesehen sind.

9. System gemäß Anspruch 8, wobei der erste Zylinder es ermöglicht, dass die zwei miteinander verbundenen Achsen relativ zu einer Verbindungswelle (360) in der horizontalen Ebene schwenkbar sind, und die zwei zweiten Zylinder es ermöglichen, dass die Achsen in eine für jede Achse vorgesehene röhrenförmige Struktur (370a,370b) hinein und aus ihr heraus geschoben werden können.

10. System gemäß einem der Ansprüche 7 bis 9, wobei die Mittel zur Änderung der Position der zwei miteinander verbundenen Achsen in longitudinaler Richtung des Fahrzeugs und in Richtung der Breite des Fahrzeugs eine Wegeventil und zwei Folgeventile umfasst.

11. System gemäß einem der Ansprüche 7 bis 10, wobei das besagte System derart gestaltet ist, dass zunächst die Position der zwei miteinander verbundenen Achsen in longitudinaler Richtung des Fahrzeugs geändert wird und dann die Position der zwei miteinander verbundenen Achsen in Richtung der Breite des Fahrzeugs geändert wird, falls die Spurweite des Fahrzeugs reduziert wird, und dass zunächst die Position der zwei miteinander verbundenen Achsen in Richtung der Breite des Fahrzeugs geändert wird und dann die Position der zwei miteinander verbundenen Achsen in longitudinaler Richtung des Fahrzeugs geändert wird, falls die Spurweite des Fahrzeugs vergrößert wird.

12. Verfahren zur Reduzierung der Spurweite eines Fahrzeugs **gekennzeichnet durch** Ändern der Position zweier miteinander verbundener Achsen (320a, 320b) in longitudinaler Richtung und in einem gesonderten Schritt Ändern der Position der zwei miteinander verbundenen Achsen in Richtung der Breite des Fahrzeugs.

13. Verfahren gemäß Anspruch 12, wobei es das Verfahren vorsieht, dass zunächst die Position der zwei miteinander verbundenen Achsen in longitudinaler Richtung des Fahrzeugs geändert wird und dann die Position der zwei miteinander verbundenen Achsen die Richtung der Breite des Fahrzeuges geändert wird, falls die Spurweite des Fahrzeugs reduziert wird, und dass zunächst die Position der zwei miteinander verbundenen Achsen in die Richtung der Breite des Fahrzeugs geändert wird und dann die Position der zwei miteinander verbundenen Achsen in longitudinaler Richtung des Fahrzeugs geändert wird, falls die Spurweite des Fahrzeugs vergrößert wird.

14. Fahrzeug, **dadurch gekennzeichnet , dass** das Fahrzeug eine Vorrichtung (300) gemäß einem der Ansprüche 1 bis 6 umfasst.

## Revendications

1. Appareil pour réduire l'écartement des roues d'un véhicule, l'appareil (300) comprenant des deuxièmes moyens (340a, 340b) pour changer la position desdits deux essieux reliés l'un à l'autre, dans la direction de largeur du véhicule, **caractérisé en ce qu'**il comprend en outre :
des moyens (330, 360) pour changer la position de deux essieux (320a, 320b) reliés l'un à l'autre, dans la direction longitudinale du véhicule.

2. Appareil selon la revendication 1, dans lequel lesdits deux essieux sont reliés l'un à l'autre au moyen d'un arbre de liaison (360).

3. Appareil selon la revendication 1 ou 2, dans lequel lesdits moyens pour changer la position des deux essieux reliés l'un à l'autre, dans la direction longitudinale du véhicule, comprennent un premier vérin (330) permettant le pivotement desdits essieux au moyen d'un arbre de liaison par rapport au châssis (350) de l'appareil dans le plan horizontal, et lesdits deuxièmes moyens pour changer la position des deux essieux reliés l'un à l'autre, dans la direction de largeur du véhicule, comprennent deux deuxièmes vérins (340a, 340b) permettant le déplacement desdits essieux dans et hors d'une structure tubulaire (370a, 370b) prévue pour chaque essieu.

4. Appareil selon l'une quelconque des revendications 1 à 3, dans lequel lesdits moyens pour changer la position des deux essieux reliés l'un à l'autre dans la direction longitudinale du véhicule et lesdits deuxièmes moyens pour changer la position des deux essieux reliés l'un à l'autre dans la direction de largeur du véhicule sont commandés hydrauliquement au moyen de vannes (410, 420, 450).

5. Appareil selon l'une quelconque des revendications 1 à 4, dans lequel ledit appareil est agencé pour changer d'abord la position desdits deux essieux reliés l'un à l'autre, dans la direction longitudinale du véhicule, et pour changer ensuite la position desdits deux essieux reliés l'un à l'autre, dans la direction de largeur du véhicule, lorsque l'écartement des roues du véhicule est réduit, et pour changer d'abord la position desdits deux essieux reliés l'un à l'autre, dans la direction de largeur du véhicule, et pour changer ensuite la position desdits deux essieux reliés l'un à l'autre, dans la direction longitudinale du véhicule, lorsque l'écartement des roues du véhicule est augmenté.

6. Appareil selon la revendication 5, dans lequel l'un desdits essieux (320a) est situé plus loin en avant dans la direction longitudinale du véhicule que l'autre desdits essieux (320b) lorsque l'écartement des roues du véhicule est dans l'état réduit, et lesdits essieux sont tous deux placés sur le même axe dans la direction longitudinale du véhicule lorsque l'écartement des roues du véhicule est augmenté à sa largeur maximum.

7. Système pour commander la réduction de l'écartement des roues d'un véhicule comprenant l'appareil de la revendication 1, **caractérisé en ce que** le système comprend en outré :
des moyens (400) pour changer la position de deux essieux (320a, 320b) reliés l'un à l'autre, dans la direction longitudinale et la direction de largeur du véhicule.

8. Système selon la revendication 7, dans lequel lesdits moyens pour commander le changement de position des deux essieux reliés l'un à l'autre, dans la direction longitudinale et la direction de largeur du véhicule, sont configurés pour commander un premier vérin pour changer la position des deux essieux reliés l'un à l'autre, dans la direction longitudinale du véhicule, et pour commander deux deuxièmes vérins pour changer la position des deux essieux reliés l'un à l'autre, dans la direction de largeur du véhicule.

9. Système selon la revendication 8, dans lequel ledit premier vérin permet le pivotement desdits essieux par rapport à un arbre de liaison (360) dans le plan horizontal, et lesdits deux deuxièmes vérins permettent le déplacement desdits essieux dans et hors d'une structure tubulaire (370a, 370b) prévue pour chaque essieu.

10. Système selon l'une quelconque des revendications 7 à 9, dans lequel lesdits moyens pour commander le changement de la position des deux essieux reliés l'un à l'autre, dans la direction longitudinale et la direction de largeur du véhicule, comprennent une vanne directionnelle et deux vannes de séquence.

11. Système selon l'une quelconque des revendications 7 à 10, dans lequel ledit système est configuré pour changer d'abord la position desdits deux essieux reliés l'un à l'autre, dans la direction longitudinale du véhicule, et pour changer ensuite la position desdits deux essieux reliés l'un à l'autre, dans la direction de largeur du véhicule lorsque l'écartement des roues du véhicule est réduit, et pour changer d'abord la position desdits deux essieux reliés l'un à l'autre, dans la direction de largeur du véhicule, et pour changer ensuite la position desdits deux essieux reliés l'un à l'autre, dans la direction longitudinale du véhicule, lorsque l'écartement des roues du véhicule est augmenté.

12. Procédé pour réduire l'écartement des roues d'un véhicule, **caractérisé par**
le changement de la position de deux essieux (320a, 320b) reliés l'un à l'autre, dans la direction longitudinale du véhicule, et à une étape séparée
le changement de la position desdits deux essieux reliés l'un à l'autre, dans la direction de largeur du véhicule.

13. Procédé selon la revendication 12, dans lequel procédé, la position desdits deux essieux reliés l'un à l'autre est d'abord changée dans la direction longitudinale du véhicule, et la position desdits deux essieux reliés l'un à l'autre est ensuite changée dans la direction de largeur du véhicule lorsque l'écartement des roues du véhicule est réduit, et la position desdits deux essieux reliés l'un à l'autre est d'abord changée dans la direction de largeur du véhicule et la position desdits deux essieux reliés l'un à l'autre est ensuite changée dans la direction longitudinale du véhicule, lorsque l'écartement des roues du véhicule est augmenté.

14. Véhicule, **caractérisé en ce que** le véhicule comprend un appareil (300) selon l'une quelconque des revendications 1 à 6.
